# EUROPEAN PATENT SPECIFICATION

(11) **EP 1 273 862 B1**
(45) Date of publication and mention of the grant of the patent: **03.05.2006**
(21) Application number: 01500160.5
(22) Date of filing: 28.06.2001
(51) Int. Cl.: F27B 9/14, C01G 21/02, C01G 21/10, F27B 9/02

(54) **Continuous furnace for the manufacture of metallic oxydes**
Durchlaufofen zur Herstellung von metallischen Oxyden
Four continu pour la production d'oxydes métalliques

(43) Date of publication of application: 08.01.2003
(73) Proprietor: Coplosa, S.A., 08040 Barcelona (ES)
(72) Inventor: Heras Cuenca, Francisco, 08040 Barcelona (ES)
(74) Representative: Durán Moya, Luis-Alfonso

(56) References cited:
- EP-A- 0 365 260
- EP-A- 0 406 954
- DE-C- 425 040
- DE-C- 680 455

## Description

The present invention relates to a continuous type furnace intended for the manufacture of metallic oxides and, in particular, for the manufacture of the lead oxide known commercially as red lead.

Continuous furnaces for the manufacture of metallic oxides are currently known which comprise a long tunnel with devices for feeding in the raw material and moving it along the chamber of the furnace, heating means, extraction means and other auxiliary means.

The furnaces known at present make it possible to achieve, on an industrial scale, the manufacture of metallic oxides, in particular red lead, but they have various drawbacks, such as excessive size, difficulty of control and the need for very bulky insulation in order to obtain an acceptable thermal output.

Moreover, the large dimensions and bulk of the furnaces known at present prevent their application in many industrial installations in which specific size limitations exist.

In the light of the above, the inventors of the present invention set themselves the task of providing a new continuous type furnace for the manufacture of metallic oxides which remedies the drawbacks mentioned above and which furthermore makes it possible to obtain the following features:
- High quality of the final product.
- Flexibility with regard to the characteristics and quality of the raw material, which may be variable, taking into account the wide possibilities of regulation of the furnace.
- Ease of handling of the furnace.
- Reliable and precise control system.
- Closed system which does not produce problems in the working environment or outside the plant.

With respect to the furnaces known at present, the furnace of the present invention has numerous advantages, outstanding among which are the low cost of investment and installation and also the low energy cost per tonne produced, low maintenance costs and rapid setting in operation.

DE-C-425 040 and DE-C-680 455 disclose furnaces with specific conditions for producing litharge wherein transfer of material is not regulated according to the state of the material being treated. Moreover, these furnaces have no gas recirculation system, so that significant temperature differences between tubular elements arise, which is undesired for the production of red lead.

EP-A-365 260 discloses a furnace for the production of red lead and litharge, wherein transfer of material between two adjacent tubular elements is not regulated as a function of the state of the material being treated in each tube, in order to obtain a uniform temperature in the reaction tubular elements. As a consequence, the quality of the obtained product changes as a function of the quality of the raw material. Moreover, the furnace discloses electrical tube heaters which are known to be unreliable as they produce holes in the tubes and breakages of the heaters.

Prior art provides a furnace in the form of a one-piece structure which in its lower part contains the combustion chamber and in the upper part comprises multiple tubular elements parallel to one another, arranged in a vertical stack, intercommunication means being arranged at the entrance and exit of each two adjacent tubular elements, such that the raw material, fed in from the upper part to the first tubular element of the assembly which forms the furnace, is treated successively by the different tubular elements in cascade, which permits a much more simplified structure of the furnace, reduced dimensions and maximum utilisation of the thermal energy.

Hence, the invention relates to a continuous furnace for the manufacture of metallic oxides constituted by
- a lower heating chamber; and
- an assembly of treatment chambers in the form of tubular elements substantially parallel to one another and arranged horizontally one above the other; and
- having means for feeding a raw material into the upper tubular treatment chamber and means for extracting the finished product from the lower tubular treatment chamber and means for discharging each of the individual tubular treatment chambers to the adjacent lower tubular treatment chamber, said means allowing the movement, in cascade, of the raw material fed into the upper tubular treatment chamber and passing successively to the lower tubular treatment chambers;
- the assembly of tubular treatment chambers being contained within single encasing body which receives heating gases from the lower heating chamber; wherein
- each of the tubular treatment chambers carries a shaft equipped with multiple blades in a radial arrangement, which are intended to effect the agitation and movement of the material being treated, each of the shafts being driven by an individual motorized reducer incorporated in the casing of the corresponding tubular treatment chamber; and
- the furnace comprises means for regulating the transfer of material from one tubular treatment chamber to the adjacent lower tubular treatment chamber according to the state of the material being treated within said one tubular treatment chamber, wherein the actuation and stoppage of the intermediate conveyors between each two adjacent tubular treatment chambers of the furnace are controlled by indication values of the amperage consumed by the respective motorized reducer driving the shaft for agitation and movement of the material from the tubular element which to be discharged.

The furnace according to the invention allows optimum regulation of treatment parameters, in particular with respect to residence time.

The passage of the raw material subjected to treatment from one tubular treatment chamber to the adjacent one located below the first, is effected by means of a system of feeders in the form of a screw spindle which are arranged at the ends of the respective tubular treatment chambers.

Each of the tubular treatment chambers has internally a shaft bearing special blades intended to agitate and move the raw material during its treatment, said shafts being driven by individual motors which allow separate control. The transfer of the material from one tubular treatment chamber to the one located immediately below it is regulated according to the state of the raw material being treated, which can be detected by the electrical consumption of the drive motor.

A further embodiment of the invention is directed to the above continuous furnace for the manufacture of metallic oxides, wherein there are arranged endless conveyors for feeding the furnace and for extracting the finished material from the furnace and intermediate conveyors between each two adjacent tubular treatment chambers to permit the discharge of the material treated in one tubular treatment chamber into the subsequent tubular treatment chamber in order to continue the treatment.

Another embodiment of the invention is directed to the above continuous furnace for the manufacture of metallic oxides, wherein an opening and closing valve is arranged in the gas outlet of the upper tubular treatment chamber for controlling the temperature within the latter.

Another embodiment of the invention is directed to the above continuous furnace for the manufacture of metallic oxides, wherein means for monitor ing the negative pressure in each of the tubular treatment chambers are ranged in order to detect possible blockages therein.

Another embodiment of the invention is directed to the above continuous furnace for the manufacture of metallic oxides, wherein inlets for industrial oxygen are arranged to permit the feeding of a counterflow of oxygen to assist and control the oxidation of the raw material.

Another embodiment of the invention is directed to the above continuous furnace for the manufacture of metallic oxides, wherein an assembly for recirculating gases from the hot gas outlet is arranged by way of a recycling control valve which communicates, by means of a specific conduit, with the combustion chamber in order to facilitate the control of the adjustment of the characteristics of the final product.

Finally, a further embodiment of the invention is directed to the above continuous furnace for the manufacture of metallic oxides, wherein the furnace assembly is composed of a lower support body carrying the lower heating chamber and supporting two upper bodies carrying the individual tubular treatment chambers, each of said upper bodies bearing part of the thermal insulation elements and of the discharging means for the material being treated, this construction permitting the dismantling of the furnace into component units and the transport and handling thereof to its re-assembly, in which the vertical stacking of the component units of the furnace and their union by means of flanges or the like is carried out.

For greater understanding there are appended hereto, by way of explanatory but non-limiting example, drawings of a furnace for the manufacture of metallic oxides produced according to the present invention.
Figure 1 shows a view in front elevation of the furnace of the present invention.
Figure 2 shows a diagrammatic cross section through the section plane indicated in Figure 1.
Figure 3 shows a view in side elevation of the same furnace of Figure 1.

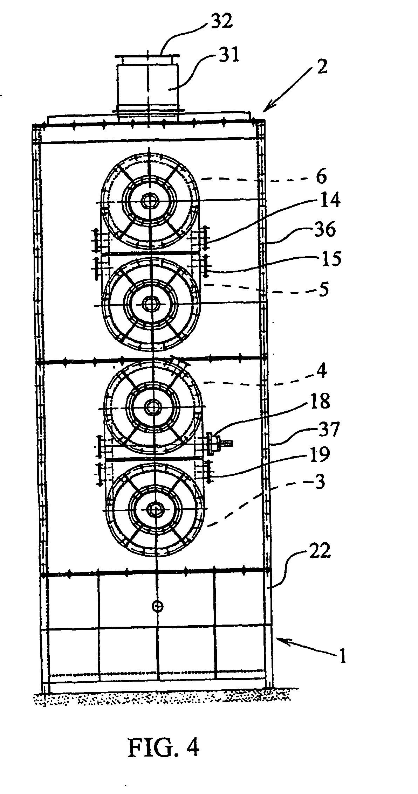

Figure 4 shows a view in side elevation of the same furnace, from the opposite side to that of Figure 3.
Figures 5 and 6 are respectively a view in side elevation and a plan view of the upper part of the structure of the furnace.

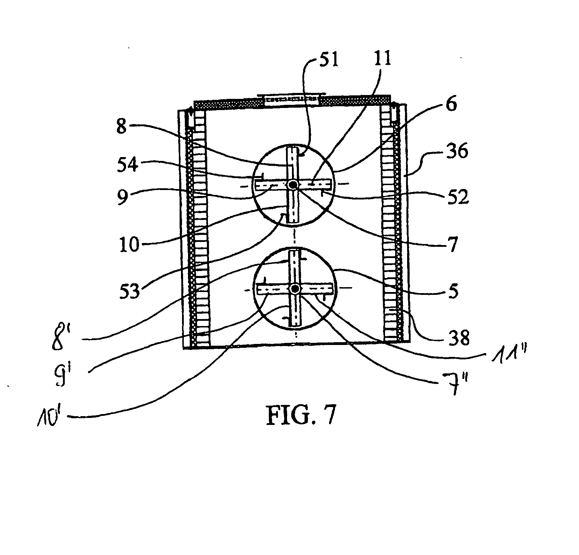

Figure 7 shows a detail in section through the section plane indicated.
Figure 8 shows a plan view of the lower or heating chamber.
Figure 9 shows a view in side elevation of the same lower chamber.

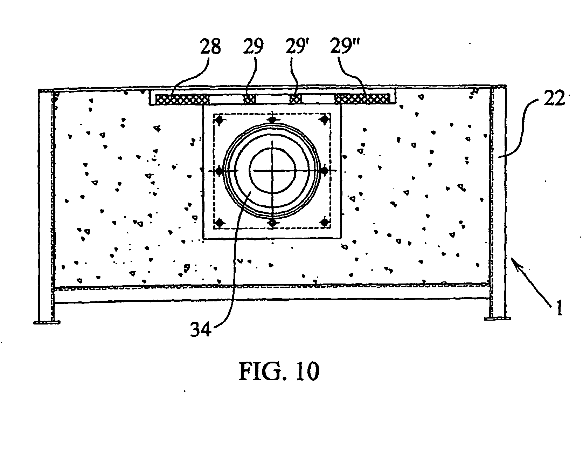

Figure 10 shows a view in section through the section plane indicated in Figure 8.
Figures 11 and 12 show sections of the ends of one of the tubular elements showing the shaft and its drive device.
Figure 13 shows a view in side elevation of the shaft with the blade assembly.
Figure 14 shows a view in front elevation of the same blade shaft shown in Figure 13.
Figure 15 shows one of the endless worm members for the extraction of raw material from one of the tubular treatment elements.
Figure 16 shows a view similar to Figure 15, referring to the endless worm device for the outlet of the manufactured metallic oxides.

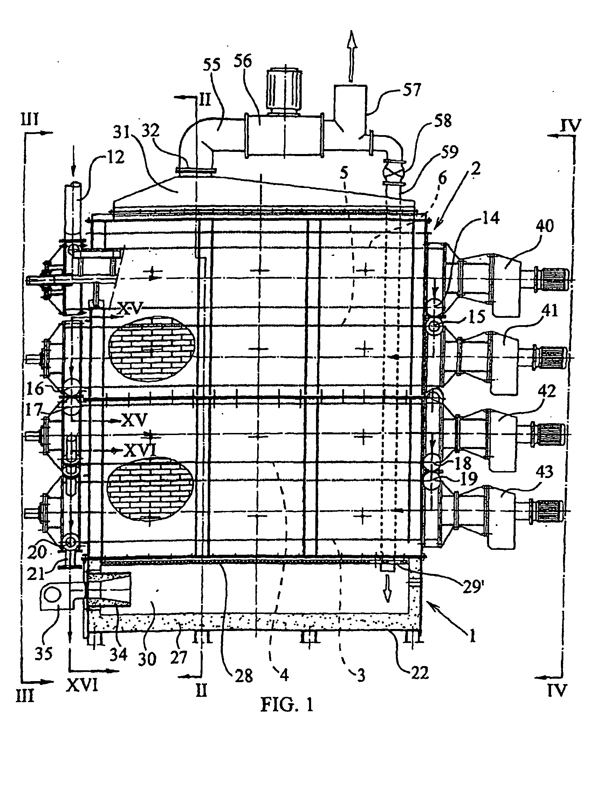

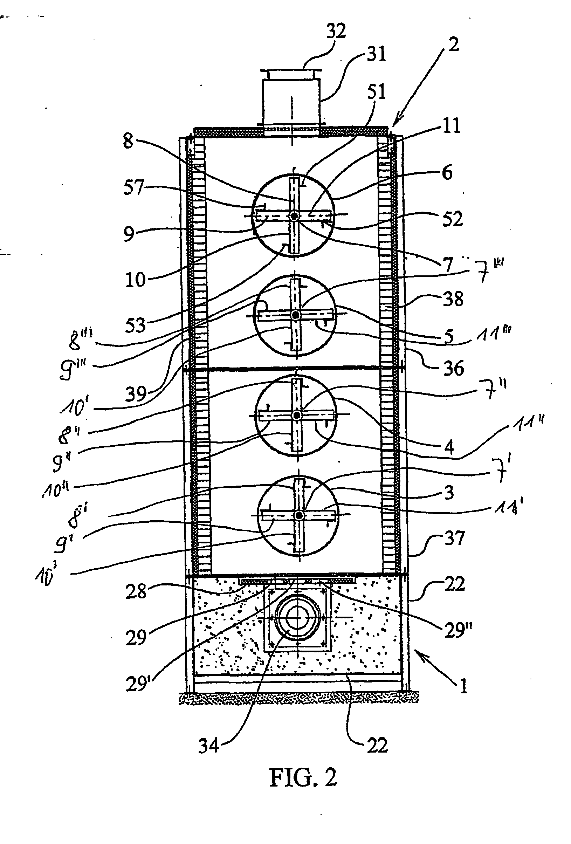

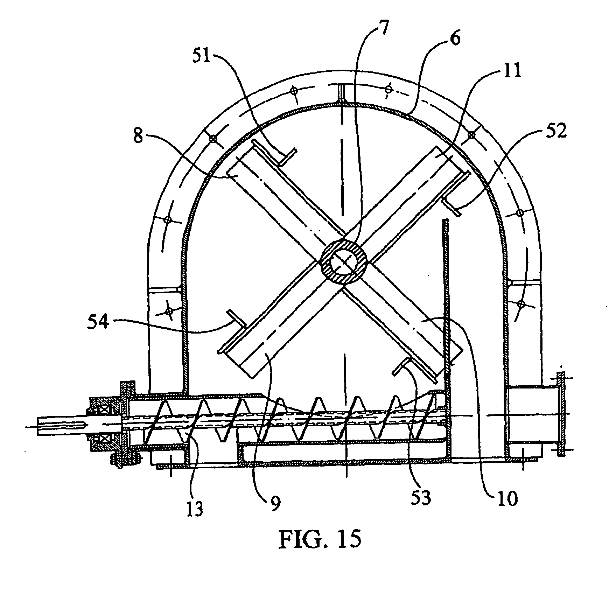

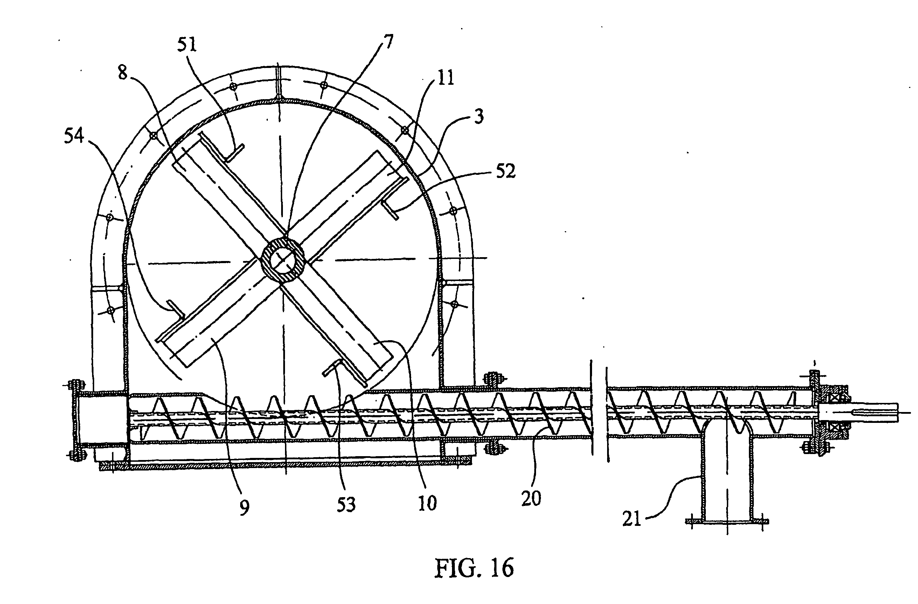

As can be seen in the drawings, the furnace of the present invention comprises a vertical one-piece structure, constituted by the union of a lower heating chamber 1 and an upper structure 2 equipped with multiple treatment chambers in the form of elements of tubular structure, in a substantially horizontal arrangement and variable in number, being four in the embodiment illustrated, that is to say, the elements indicated by the numerals 3, 4, 5 and 6 shown in Figure 2. Each of said tubular treatment chambers has internally a shaft in which are incorporated a series of radial blades, one of said shafts being designated by the numeral 7, corresponding to the tubular element 6, said shaft carrying several arm assemblies in the shape of a cross, indicated respectively by the numerals 8, 9, 10 and 11. In spite of the fact that the component parts have not been numbered, it should be understood that the remaining tubular elements 3, 4 and 5 have an analogous structure i.e. shafts 7', 7", 7'" equipped with multiple blades 8', 9', 10', 11', 8", 9", 10", 11", 8'", 9'", 10'", 11'". The raw material is fed from one end of the upper element 6 by means of a tubular mouth, for example that indicated by the numeral 12 in Figure 1, said raw material passing successively along the chamber 6 and towards the lower chambers by means of transverse devices of endless type such as that shown in Figure 15, in which can be seen the endless device 13 arranged transversely at the end of the tubular element 6 opposed to the material inlet 12. In said Figure 1 there can be seen diagrammatically, represented by the numeral 14, the encasing body of said endless worm 13. Another adjacent endless worm device 15 corresponding to the lower tubular treatment chamber there is intended to feed to said lower tubular treatment chamber the material proceeding from the upper chamber extracted by the endless worm 13. At the ends of the remaining tubular treatment chambers there is a similar arrangement of endless worms, being indicated diagrammatically by the numerals 16 and 17, and also 18 and 19, said assembly of devices terminating in a screw spindle 20, Figure 16, which feeds the product outlet of the furnace indicated by the numeral 21

The present invention therefore represents the construction of the furnace according to an arrangement which permits the descent of the material in cascade, forming a one-piece assembly which is heated exclusively by the lower heating chamber 1, giving rise to a very compact, manageable assembly, easily transportable in the form of individual elements that can be assembled at its destined site, moreover allowing an excellent thermal output to be obtained.

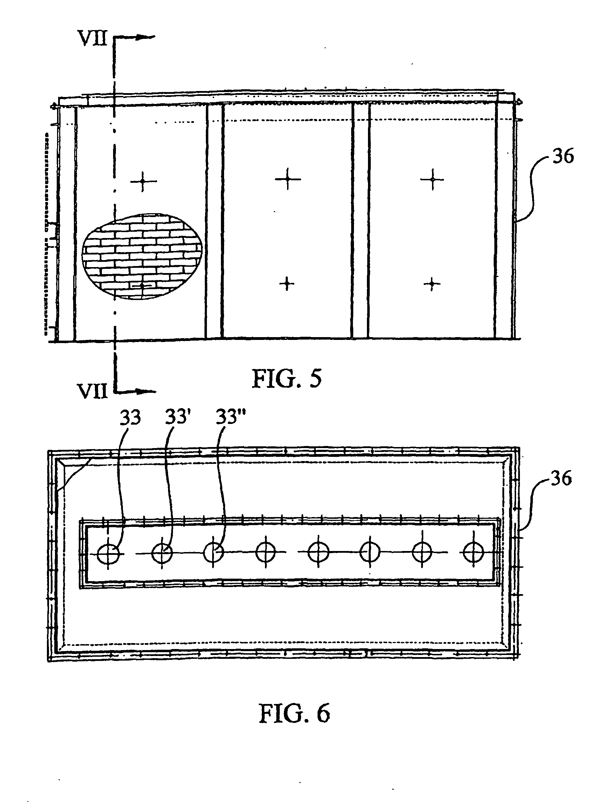

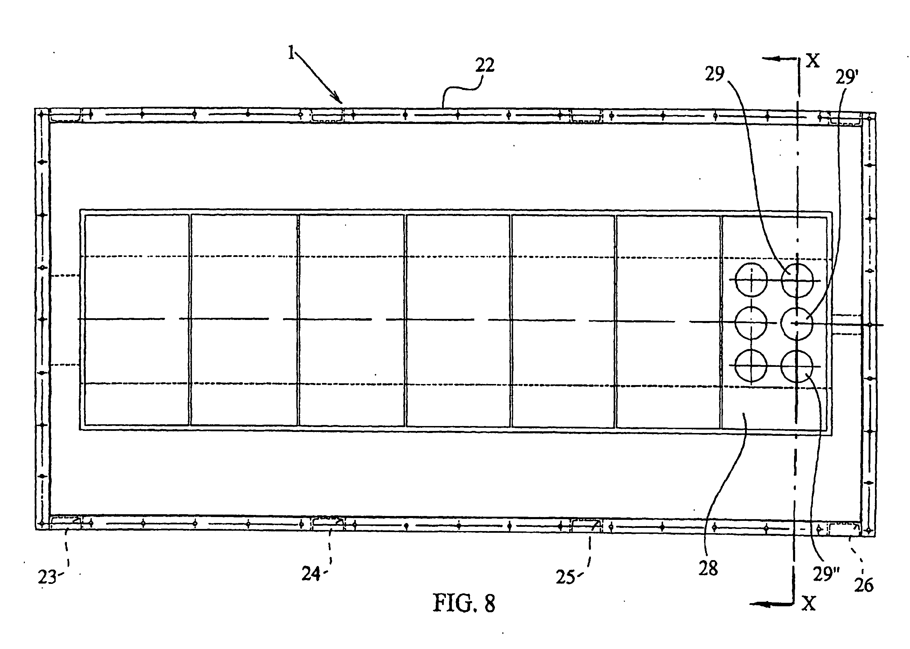

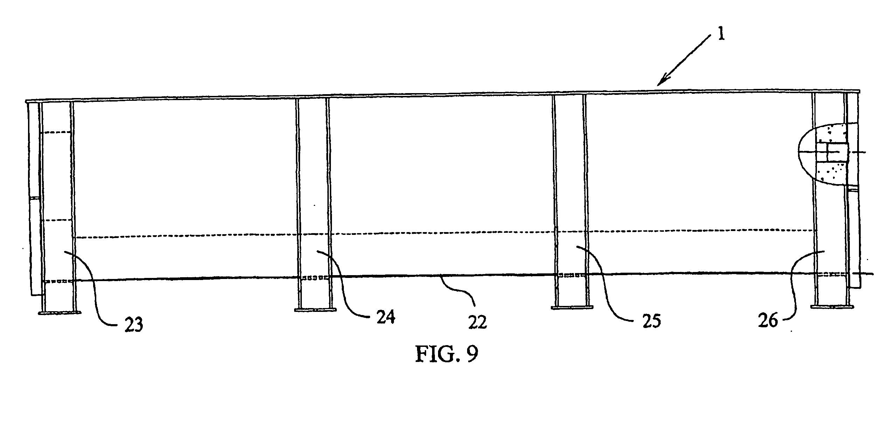

The heating chamber 1 comprises an external load-bearing structure 22 with support feet, variable in number, such as those indicated by the numerals 23, 24, 25 and 26 in Figure 9, including a refractory lining 27 and an upper plate 28 equipped with end openings, variable in number, 29, 29', 29"..., which have been shown as six in number in Figure 8, permitting the passage of the gases from the combustion chamber 30 to the upper body 2, in which the hot gases act successively on the different tubular elements 3, 4, 5 and 6. The burnt gases pass out through the upper part by means of a recovery hood 31 and smoke outlet 32. Into the hood 31 open the different outlet pipes 33, 33', 33"... of the upper body 2, as shown in Figure 6.

The combustion chamber 30 receives the gases from a nozzle 34 supplied by the heater 35, preferably fed by means of natural gas or some other suitable fuel.

The furnace has means for recirculation of gases from the gas outlet to the combustion chamber, as shown in Figure 1, in which can be seen the gas outlet 55 to the extractor 56 and thence to the chimney 57 or, alternatively, by way of a valve 58 for controlling the recycling of hot gases and downward conduction 59 again to the combustion chamber. In this way an easy means of control is provided for adjusting the characteristics of the final product.

The upper body 2 will preferably be produced in two units 36 and 37, Figure 2, which bear internally the refractory linings 38 and 39.

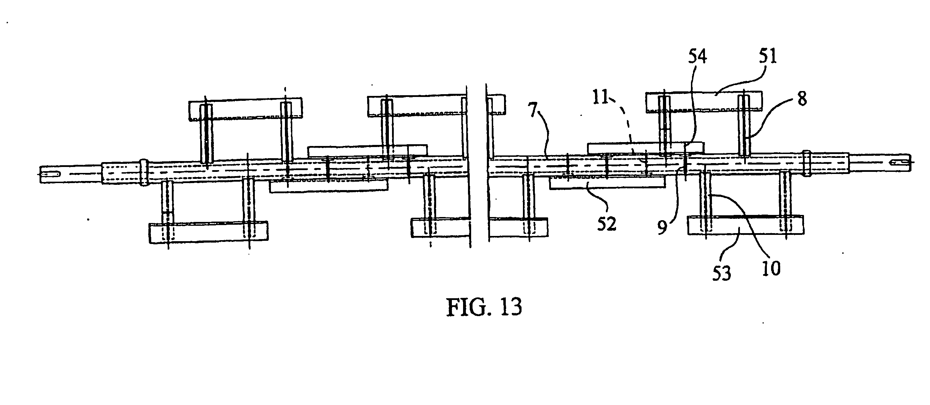

Each of the tubular treatment chambers 3, 4, 5, 6 has internally, as indicated previously, a rotary shaft 7, 7', 7", 7'" bearing a blade assembly, such as is shown in more detail in Figure 13, in which is shown the shaft 7, which has distributed along its length a plurality of elements substantially in a U-shape, such as those indicated by the numerals 8, 9, 10 and 11, intended to effect the agitation and movement of the raw material within each of said tubular treatment chambers 3, 4, 5, 6.

The shafts 7, 7', 7", 7"' of each of the tubular treatment chambers 3, 4, 5, 6 have end couplings for their actuation by means of the corresponding motors and reduction gears, such as have been indicated in Figure 1 by the numerals 40, 41, 42 and 43. Given the symmetrical structure of the ends of said shafts, they could be driven, as desired, from either side.

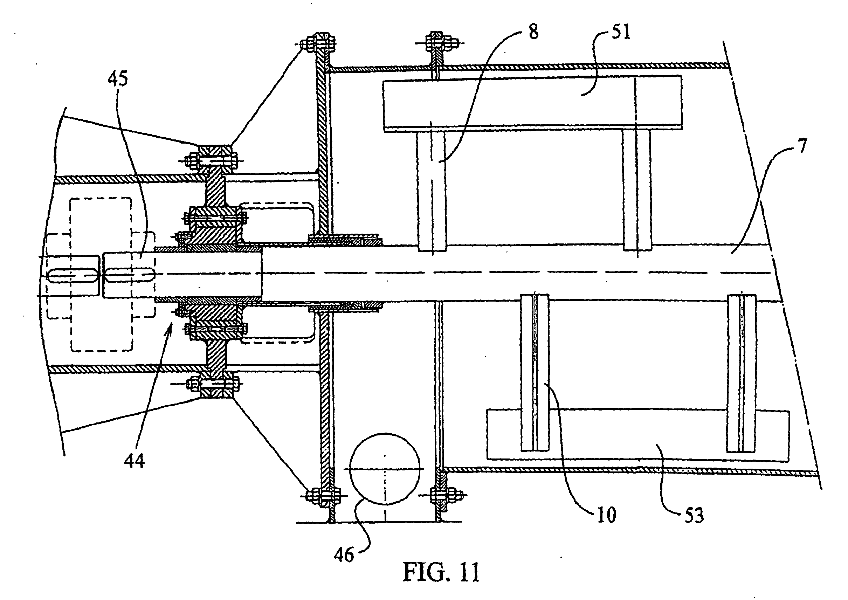

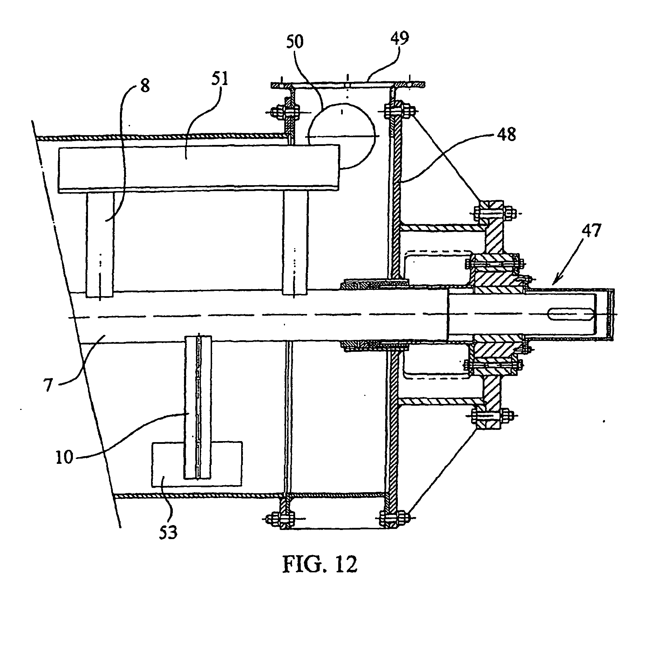

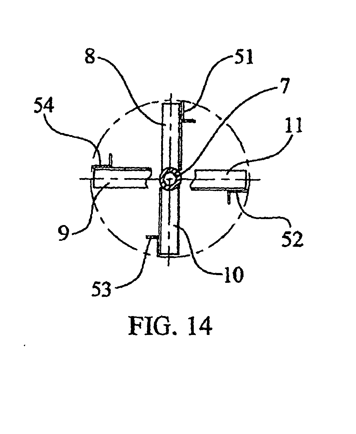

In Figures 11 and 12 can be seen the mounting of the shafts of each of the tubular treatment chambers. In the case illustrated, corresponding also to the shaft 7, there can be seen in Figure 11 the left-hand end of the shaft 7 mounted on bearings of an intermediate support 44, the coupling end 45 being available for the coupling of a motorized reducer assembly which has not been shown. In said figure can be seen the tubular pipe 46 intended for the endless conveyor for extracting the treated material. At the other end shown in Figure 12, the shaft 7 likewise has a coupling, which in this case is shown closed by a protective cover 47, which would permit the coupling of a motorized reducer assembly as shown in Figure 1. At this end also, the shaft 7 is mounted on bearings incorporated in an intermediate partition wall 48. There can also be seen in the figure the manifold 49 for connection to the upper tubular chamber and the opening 50 of the corresponding endless feeder. As shown in Figures 13 and 14, each of the shafts 7, 7', 7", 7'" of the tubular elements 3, 4, 5, 6 has multiple U-shaped elements with radial elements such as 8, 9, 10 and 11, 8', 9', 10', 11', 8", 9", 10", 11"' the two arms of each of said U-shaped elements being joined by a cross-member in the form of an angle which has been indicated by the numerals 51, 52, 53 and 54.

The indicated construction of the furnace permits the manufacture of metal oxides as red lead with a high energy output and under very precise manufacturing control conditions, which permits significant flexibility with regard to the quality of the raw material.

In an exemplary embodiment, the treatment tubes will have an inside diameter of approx. 700 mm.

The raw material with which the furnace operates will preferably be a partially oxidesed metal oxide as, for example lead oxide called massicot which has a percentage of free lead varying between approximately 3 and 10%. The final product obtained is lead oxide, also called red lead, orangey-red in colour, with oxidation ranging, for example, between approximately 10 and 34% of plumbous oxide, that is to say, PbO₂

The one-piece structure of the furnace supports the weight thereof, comprising the tubular treatment chambers, the endless worms, motorized reducer assemblies and encasing body and insulation and refractory linings. The outside dimensions, in an exemplary embodiment, are about 2 by 3.90 metres in section and 6.5 metres in height, although, as can be understood, the concrete dimensions of the furnace will depend on the concrete installation produced in each case.

The number of tubular treatment chambers will be variable, although in the embodiments shown it is four, each of the tubes being mounted with one end free, such as to permit free expansion when the heating of the furnace takes place.

The regulation of the discharge of each of the tubular treatment chambers or individual treatment chambers is effected by automated control, setting in operation the endless conveyor which discharges the corresponding tubular treatment chamber. Control can be provided by monitoring of the electrical consumption of the motorized reducers, there being a minimum and a maximum indication point, such that when the electrical consumption in amperes exceeds the maximum indication point, the endless discharge conveyor is set in operation, which empties the upper tube, by discharging it into the lower tube until the consumption in amperes reaches the lower indication value.

The furnace will be thermally insulated by refractory bricks, suitable for a temperature of up to 1260°C, said bricks, together with the metal structure, providing the furnace with the appropriate rigidity. The insulation is completed by means of silicate, in order to reduce the escape of heat to the outside.

As indicated, in order to permit the individual expansion of the tubes, the latter are mounted freely at one of their ends, that is to say, on a support structure but without being secured on the latter.

The temperature control makes it possible to maintain the temperature of the furnace within the control limits by acting on the heating burner.

Although not shown, the gas outlet 32 will be connected to an extractor with opening and closing valve which will also permit the control of the temperature in the upper chamber.

Another of the controls which are provided in the furnace of the invention is that for the negative pressure in the tubular elements, in order to know in advance the possible problems of obstructions of the product within the furnace which, should they arise, would cause the opening and manual emptying of the overloaded tube.

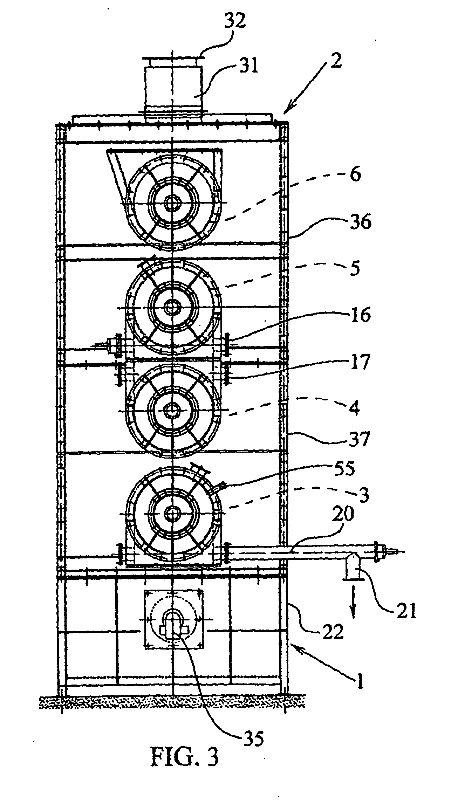

The production volume and the quality of the final product are obtained partly owing to a counterflow of industrial oxygen which facilitates the oxidation reaction. Figure 3 shows the oxygen inlet 55 into the tubular element 3.

The construction of the furnace is effected by means of a metallic structure in the three units described previously, that is to say, the base 1 and the upper units 36 and 37 shown in Figure 2, such that once the pre-assembly and tests have been carried out in the stage of construction in the factory, the assembly will be dismantled to facilitate transport in containers and allow its subsequent assembly on the installation site, by joining the different units by means of the connecting flanges provided for the purpose. The principal control parameters of the furnace are as follows:
- temperature of the furnace, for the purpose of controlling the operation of the burner;
- load in amperes of each of the motors of the individual tubular elements, in order to control the discharge between them;
- differential pressure in the tubular treatment chambers, in order to control possible blockages of the material within the latter;
- opening of the valve of the upper extractor, in order to control the temperature in the upper chamber and the evacuation of the burnt gases;
- rotational speed of the endless feed member of the furnace, in order to control the production flow rate; and
- control of the flow rate of oxygen within the furnace, in order to regulate the degree of oxidation.

## Claims

1. A continuous furnace for the manufacture of metallic oxides constituted by
- a lower heating chamber (1); and
- an assembly (2) of treatment chambers (3, 4, 5, 6, ...) in the form of tubular elements substantially parallel to one another and arranged horizontally one above the other, and
- having means (12) for feeding a raw material into the upper tubular treatment chamber (6, ...) and means (20) for extracting the finished product from the lower tubular treatment chamber (3) and means (13, 15, 16, 17, 18, 19) for discharging each of the individual tubular treatment chambers (..., 6, 5, 4) to the adjacent lower tubular treatment chamber (..., 5, 4, 3), said means allowing the movement, in cascade, of the raw material fed into the upper tubular treatment chamber (6) and passing successively to the lower tubular treatment chambers (..., 5, 4, 3);
- the assembly (2) of tubular treatment chambers (3, 4, 5, 6, ...) being contained within a single encasing body which receives heating gases from the lower heating chamber (1); wherein
- each of the tubular treatment chambers (3, 4, 5, 6, ...) carries a shaft (7, 7', 7", 7"', ...) equipped with multiple blades (8, 9, 10, 11, 8', 9', 10', 11', 8", 9", 10", 11 ", 8"', 9"', 10"', 11 "', ...) in a radial arrangement, which are intended to effect the agitation and movement of the material being treated, each of the shafts (7, 7', 7", 7"') being driven by an individual motorized reducer incorporated in the casing of the corresponding tubular treatment chamber (3, 4, 5, 6, ...); and
- the furnace comprises means for regulating the transfer of material from one tubular treatment chamber (..., 6, 5, 4) to the adjacent lower tubular treatment chamber (..., 5, 4, 3) according to the state of the material being treated within said one tubular treatment chamber, wherein the actuation and stoppage of the intermediate conveyors (13, 15, 16, 17, 18, 19) between each two adjacent tubular treatment chambers (3, 4, 5, 6, ...) of the furnace are controlled by indication values of the amperage consumed by the respective motorized reducer (40-42) driving the shaft (7) for agitation and movement of the material from the tubular element (3, 4, 5, 6, ...) which to be discharged.

2. The continuous furnace for the manufacture of metallic oxides according to claim 1, wherein there are arranged endless conveyors (12) for feeding the furnace and (20) for extracting the finished material from the furnace and intermediate conveyors (13, 15, 16, 17, 18 19, ...) between each two adjacent tubular treatment chambers (3, 4, 5, 6, ...) to permit the discharge of the material treated in one tubular treatment chamber (3, 4, 5, ...) into the subsequent tubular treatment chamber (4, 5, 6, ...) in order to continue the treatment.

3. The continuous furnace for the manufacture of metallic oxides according to claim 1 or claim 2, wherein an opening and closing valve is arranged in the gas outlet (55) of the upper tubular treatment chamber (6) for controlling the temperature within the latter.

4. The continuous furnace for the manufacture of metallic oxides according to any of claims 1 to 3, wherein means for monitoring the negative pressure in each of the tubular treatment chambers (3, 4, 5, 6, ...) are ranged in order to detect possible blockages therein.

5. The continuous furnace for the manufacture of metallic oxides according to any of claims 1 to 4, wherein inlets for industrial oxygen are arranged to permit the feeding of a counterflow of oxygen to assist and control the oxidation of the raw material.

6. The continuous furnace for the manufacture of metallic oxides according to any of claims 1 to 5. wherein an assembly (downward conduit 59) for recirculating gases from the hot gas outlet (55) is arranged by way of a recycling control valve (58) which communicates, by means of a specific conduit (59); with the combustion chamber (30) in order to facilitate the control of the adjustment of the characteristics of the final product.

7. The continuous furnace for the manufacture of metallic oxides according to any of claims 1 to 6, wherein the furnace assembly is composed of a lower support body carrying the lower heating chamber (1) and supporting two upper bodies (36, 37) carrying the individual tubular treatment chambers (3, 4, 5, 6, ...), each of said upper bodies (36, 37) bearing part of the thermal insulation elements (38, 39) and of the discharging means (13, 15, 16, 17, 18, 19) for the material being treated, this construction permitting the dismantling of the furnace into component units and the transport and handling thereof to its re-assembly, in which the vertical stacking of the component units of the furnace and their union by means of flanges or the like is carried out.

## Revendications

1. Four continu pour la fabrication d'oxydes métalliques, constitué par
- une chambre de chauffage inférieure (1) ; et
- un ensemble (2) de chambres de traitement (3, 4, 5, 6, ...) sous forme d'éléments tubulaires sensiblement parallèles entre eux et disposés horizontalement l'un au-dessus de l'autre ; et
- comportant des moyens (12) pour alimenter une matière première dans la chambre de traitement tubulaire supérieure (6, ...) et des moyens (20) pour extraire le produit fini de la chambre de traitement tubulaire inférieure (3) et des moyens (13, 15, 16, 17, 18, 19) pour décharger chacune des chambres de traitement tubulaires individuelles ( ... , 6, 5, 4) dans la chambre de traitement tubulaire inférieure contiguë (..., 5, 4, 3), lesdits moyens permettant le mouvement, en cascade, des matières premières alimentées dans la chambre de traitement tubulaire supérieure (6) et passant successivement aux chambres de traitement tubulaires inférieures (.., 5, 4, 3) ;
- l'ensemble (2) des chambres de traitement tubulaires (3, 4, 5, 6, ...) étant renfermé à l'intérieur d'un corps de renfermement unique qui reçoit les gaz de chauffage en provenance de la chambre de chauffage inférieure (1) ; dans lequel
- chacune des chambres de traitement tubulaires (3, 4, 5, 6, ... ) porte un arbre ( 7, 7', 7", 7"', ...) équipé de pales multiples (8, 9, 10, 11, 8', 9', 10', 11', 8", 9", 10", 11", 8"', 9"', 10"', 11"', ...) en agencement radial et qui sont destinées à effectuer l'agitation et le mouvement du matériau en cours de traitement, chacun des arbres (7, 7', 7", 7"') étant entraîné par un réducteur motorisé individuel incorporé dans le logement de la chambre de traitement tubulaire correspondante (3, 4, 5, 6, ...) ; et
- le four comprend des moyens pour réguler le transfert de matière en provenance d'une première chambre de traitement tubulaire (..., 6, 5, 4) vers la chambre de traitement tubulaire inférieure contiguë (..., 5, 4, 3) selon l'état de la matière en cours de traitement à l'intérieur de ladite première chambre de traitement tubulaire, dans lequel l'actionnement et l'arrêt des transporteurs intermédiaires (13, 15, 16, 17, 18, 19) entre chacune des deux chambres de traitement tubulaires contiguës (3, 4, 5, 6, ...) du four sont commandés par des valeurs indicatives de l'ampérage consommé par le réducteur motorisé respectif (40-42) commandant l'arbre (7) pour l'agitation et le mouvement de la matière provenant de l'élément tubulaire (3, 4, 5, 6, ...) et qui doit être déchargée.

2. Four continu pour la fabrication d'oxydes métalliques selon la revendication 1, dans lequel sont disposés des transporteurs sans fin (12) pour alimenter le four et (20) pour extraire la matière finie du four et des transporteurs intermédiaires (13, 15, 16, 17, 18, 19, ...) entre chacune des deux chambres de traitement tubulaires contiguës (3, 4, 5, 6, ...) pour permettre la décharge de la matière traitée dans une chambre de traitement tubulaire (3, 4, 5, ...) jusque dans la chambre de traitement tubulaire consécutive (4, 5, 6, ...) afin de poursuivre le traitement.

3. Four continu pour la fabrication d'oxydes métalliques selon la revendication 1 ou la revendication 2, dans lequel une soupape d'ouverture et de fermeture est disposée dans la sortie des gaz (55) de la chambre de traitement tubulaire supérieure (6) pour commander la température à l'intérieur de cette dernière.

4. Four continu pour la fabrication d'oxydes métalliques selon l'une quelconque des revendications 1 à 3, dans lequel des moyens pour commander la pression négative dans chacune des chambres de traitement tubulaires (3, 4, 5, 6, ...) sont disposés de façon à détecter des blocages éventuels dans celles-ci.

5. Four continu pour la fabrication d'oxydes métalliques selon l'une quelconque des revendications 1 à 4, dans lequel des entrées pour l'oxygène industriel sont disposées de façon à permettre l'alimentation d'un contre-courant d'oxygène pour assister et contrôler l'oxydation de la matière première.

6. Four continu pour la fabrication d'oxydes métalliques selon l'une quelconque des revendications 1 à 5, dans lequel un ensemble de conduite descendante pour les gaz de recyclage en provenance de la sortie de gaz chauds (55) est prévu au moyen d'une soupape de commande de recyclage (58) qui communique par un conduit spécifique (59) avec la chambre de combustion (30), afin de faciliter la commande du réglage des caractéristiques du produit fini.

7. Four continu pour la fabrication d'oxydes métalliques selon l'une quelconque des revendications 1 à 6, dans lequel l'ensemble de four est constitué d'un corps de support inférieur portant la chambre de chauffage inférieure (1) et supportant deux corps supérieurs (36, 37) portant les chambres de traitement tubulaires individuelles (3, 4, 5, 6, ...), chacun desdits corps supérieurs (36, 37) portant une partie des éléments d'isolation thermique (38, 39) et des moyens de décharge (13, 15, 16, 17, 18, 19) pour la matière à traiter, cette construction permettant le démontage du four en unités constitutives et le transport et sa manutention pour son remontage, dans lequel est effectué l'empilage des unités constitutives du four et leur liaison au moyen de brides ou de dispositifs de liaison analogues.

## Patentansprüche

1. Durchlaufofen zur Herstellung von metallischen Oxyden, bestehend aus
- einer unteren Heizkammer (1); und
- einer Baugruppe (2) von Behandlungskammern (3, 4, 5, 6...) in der Form von rohrförmigen Elementen, die im wesentlichen parallel zueinander und horizontal eines über dem anderen angeordnet sind; und
- umfassend eine Einrichtung (12) zum Zuführen von Rohmaterial in die obere rohrförmige Behandlungskammer (6...) und eine Einrichtung (20) zum Entnehmen des fertigen Produkts aus der unteren rohrförmigen Behandlungskammer (3) und eine Einrichtung (13, 15, 16, 17, 18, 19) zum Entleeren jeder der einzelnen rohrförmigen Behandlungskammern (...6, 5, 4) zur angrenzenden unteren rohrförmigen Behandlungskammer (...5, 4, 3), wobei die Einrichtungen die kaskadenartige Bewegung des in die obere rohrförmige Behandlungskammer (6) eingeführten Rohmaterials und sukzessive Weiterleiten an die unteren rohrförmigen Behandlungskammern (...5, 4, 3) ermöglicht;
- wobei die aus den rohrförmigen Behandlungskammern (3, 4, 5, 6,...) bestehende Baugruppe (2) in einem einzigen umschließenden Körper aufgenommen ist, welcher Heizgase aus der unteren Heizkammer (1) erhält; wobei
- jede der rohrförmigen Behandlungskammern (3, 4, 5, 6...) eine Welle (7, 7', 7", 7'",...) trägt, die mit Mehrfachschaufeln (8, 9, 10, 11, 8', 9', 10', 11', 8", 9", 10", 11", 8"', 9'", 10"', 11"',...) in radialer Anordnung ausgestattet ist, welche dazu bestimmt sind, das Rühren und Bewegen des zu behandelnden Materials zu bewirken, wobei jede der Wellen (7, 7', 7", 7'") durch einen eigenen motorisierten Reduzierer angetrieben wird, der in dem Gehäuse der zugehörigen rohrförmigen Behandlungskammer (3, 4, 5, 6, ...) enthalten ist; und
- wobei der Ofen eine Einrichtung zum Regulieren des Materialtransfers von einer rohrförmigen Behandlungskammer (...6, 5, 4) zur angrenzenden unteren rohrförmigen Behandlungskammer (...5, 4, 3) abhängig vom Zustand des innerhalb des einen rohrförmigen Behandlungskammer zu behandelnden Materials umfasst, wobei das Betätigen und Anhalten der Zwischenförderer (13, 15. 16, 17, 18, 19) zwischen je zwei benachbarten rohrförmigen Behandlungskammern (3, 4, 5, 6,...) des Ofens gesteuert werden durch Anzeigen von Amperewerten, die von den entsprechenden motorisierten Reduzierern (40-42), die die Welle (7) zum Rühren und Bewegen des Materials desjenigen rohrförmigen Elements (3, 4, 5, 6...), das zu entleeren ist, verbraucht werden.

2. Durchlaufofen zur Herstellung von metallischen Oxyden gemäß Anspruch 1, wobei Endlosförderer (12) zum Beladen des Ofens und (20) zum Entnehmen des fertigen Materials aus dem Ofen und Zwischenförderer (13, 15, 16, 17, 18. 19, ...) zwischen jeweils zwei benachbarten rohrförmigen Behandlungskammern (3, 4, 5, 6...) angeordnet sind, um das Entleeren in einer rohrförmigen Behandlungskammer (3, 4, 5...) behandelten Materials in die nächstfolgende rohrförmige Behandlungskammer (4, 5, 6....) zu ermöglichen, um die Behandlung fortzuführen.

3. Durchlaufofen zur Herstellung von metallischen Oxyden gemäß Anspruch 1 oder 2, wobei ein Öffnungs- und Schließventil in den Gasauslaß (55) der oberen rohrförmigen Behandlungskammer (6) vorgesehen ist, zur Steuerung der Temperatur in der letztgenannten.

4. Durchlaufofen zur Herstellung von metallischen Oxyden gemäß einem der Ansprüche 1 bis 3, wobei Mittel zur Überwachung des Unterdrucks in jeder der rohrförmigen Behandlungskammern (3, 4, 5, 6,...) angeordnet sind, um mögliche Verblockungen darin zu detektieren.

5. Durchlaufofen zur Herstellung von metallischen Oxyden gemäß einem der Ansprüche 1 bis 4, wobei Einlässe für industriellen Sauerstoff angeordnet sind, um die Zuführung eines Sauerstoffgegenstroms zu erlauben, um die Oxidation des Rohmaterials zu unterstützen und zu steuern.

6. Durchlaufofen zur Herstellung von metallischen Oxyden gemäß einem der Ansprüche 1 bis 5, wobei eine Baugruppe (Abwärtsleitung 59) zum Rezirkulieren von Gasen aus dem Heisgasauslaß (55) als ein Recycle-Steuerventil (58) vorgesehen ist, welches über eine spezielle Leitung (59) mit der Verbrennungskammer (30) kommuniziert, um die Steuerung der Einstellung der Eigenschaften des Endprodukts zu erleichtern.

7. Durchlaufofen zur Herstellung von metallischen Oxyden gemäß einem der Ansprüche 1 bis 6, wobei die Ofenbaugruppe aus einem unteren Stützkörper besteht, der die untere Heizkammer (1) trägt und zwei obere Körper (36, 37) stützt, die die einzelnen rohrförmigen Behandlungskammern (3, 4, 5, 6, ...) tragen, wobei jede der beiden oberen Körper (36, 37) einen Teil der Isolierelemente (38, 39) und der Entleerungseinrichtung (13, 15, 16, 17, 18, 19) für das zu behandelnde Material tragen, wobei diese Konstruktion das Entmanteln des Ofens in Komponenteneinheiten und deren Transport und Handhabung für ihren Neuaufbau ermöglicht, bei dem die vertikale Stapelung der Komponenteneinheiten des Ofens und ihre Vereinigung mittels Flanschen oder dergleichen durchgeführt wird.
